# EUROPEAN PATENT APPLICATION

(11) **EP 4 745 423 A1**
(43) Date of publication of application: **20.05.2026**
(21) Application number: 25215462.0
(22) Date of filing: 13.11.2025
(51) Int. Cl.: F16D 28/00, B60K 23/02, F16D 48/06, G05G 1/44

(54) **ELECTRONIC CLUTCH FOR ROAD VEHICLES**

(30) Priority: 13.11.2024 IT 202400025581
(71) Applicant: FERRARI S.p.A., 41100 Modena (IT)
(72) Inventor: SEGALINI, Alessandro, 41100 MODENA (IT); BARALDINI, Marco, 41100 MODENA (IT); MONFARDINI, Stefano, 41100 MODENA (IT); SPLENDI, Luca, 41100 MODENA (IT)
(74) Representative: Studio Torta S.p.A.

(57) **Abstract**

An electronic clutch for road vehicles has a clutch pedal (3) mounted so as to rotate around a rotation axis (4) from and to a rest position; a detection device (5), in particular an angular position sensor, to detect the angular position of the clutch pedal (3) around the rotation axis (4); and a pushing assembly (12), which is configured to move the clutch pedal (3) to its rest position and normally hold it there, and is provided with a cylinder (13), a piston (15) coupled to the cylinder (13) in a sliding manner, and a pushing device (19) interposed between the cylinder (13) and the piston (15) to hold an end face (22) of the piston (15) in contact with the clutch pedal (3).

## Description

### CROSS-REFERENCE TO RELATED APPLICATIONS

This patent application claims priority from Italian patent application no. 102024000025581 filed on November 13, 2024, the entire disclosure of which is incorporated herein by reference.

### TECHNICAL FIELD

The present invention relates to an electronic clutch for road vehicles.

### BACKGROUND

In particular, the present invention relates to an electronic clutch of the type comprising a clutch pedal mounted so as to rotate around a rotation axis from and to a rest position; and a detection device, in particular an angular position sensor, to detect the angular position of the clutch pedal around the rotation axis and to supply an electrical signal to an electronic control unit configured to control the operation of the electronic clutch itself.

The electronic clutch is also provided with a pushing device to move the clutch pedal to its rest position and normally hold it there.

The pushing device comprises a plurality of springs, normally at least three springs, mounted in series with each other to simulate a load characteristic of the clutch pedal.

The known electronic clutches of the type described above have some drawbacks mainly deriving from the fact that, due to the relatively high number of springs, the pushing device is relatively complex and expensive.

The known electronic clutches of the type described above also have the further drawback that, in order to modify the load characteristic simulated by the pushing device, the pushing device must be modified either by using springs of different stiffness or by a different installation of the springs on the clutch pedal with consequent impact on the project and/or design of the clutch pedal itself.

### SUMMARY

The object of the present invention is to provide an electronic clutch for road vehicles that is free from the drawbacks set out above and that is simple and economical to realise.

According to the present invention, there is provided an electronic clutch for road vehicles as claimed in the appended claims.

### BRIEF DESCRIPTION OF THE DRAWINGS

The present invention will now be described with reference to the attached drawings, which show a nonlimiting embodiment example thereof, wherein:
Figure 1 is a schematic perspective view, with parts removed for clarity, of a preferred embodiment of the electronic clutch for road vehicles of the present invention;
Figures 2a, 2b, 2c are three schematic side views, with parts removed for clarity, of the electronic clutch of Figure 1 shown in three different operating positions;
Figure 3 is a schematic perspective view, with parts removed for clarity, of a detail of the electronic clutch of Figures 1 and 2; and
Figure 4 is a schematic perspective view, with parts removed for clarity, of a detail of Figure 3.

### DESCRIPTION OF EMBODIMENTS

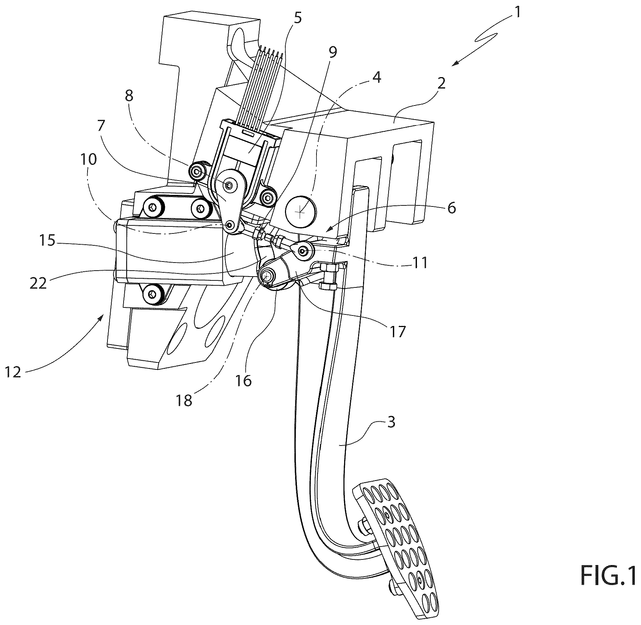

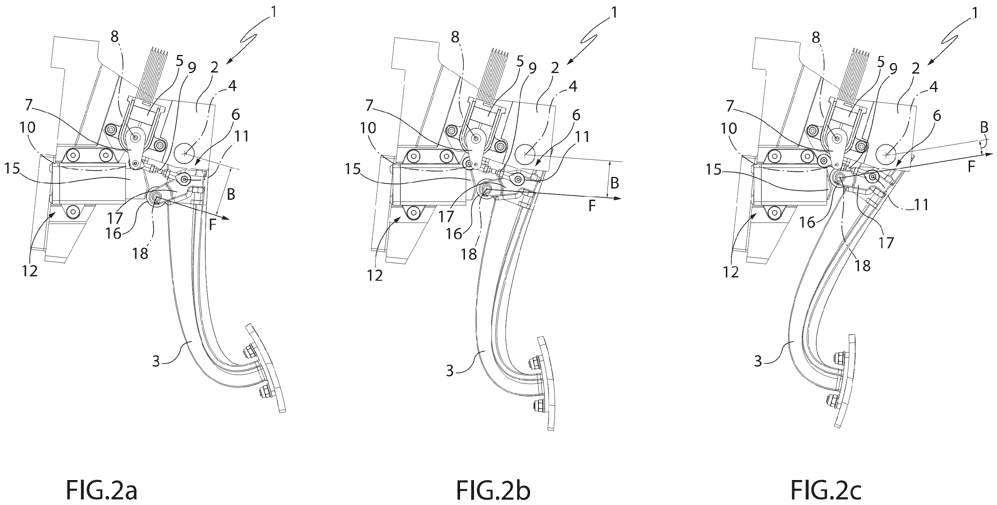

With reference to Figures 1 and 2, 1 denotes, as a whole, an electronic clutch for road vehicles comprising a support frame 2 defining part of, or fixed to, a support frame of a known road vehicle (not shown).

The electronic clutch 1 further comprises a clutch pedal 3 hinged to the frame 2 to rotate, with respect to the frame 2 and under the thrust of the driver, around a fulcrum axis 4 between a rest position (Figure 2a) and at least two operating positions (Figures 2b and 2c); and a detection device defined, in this case, by an angular position sensor 5 to detect the angular position of the clutch pedal 3 around the axis 4 and to supply an electrical signal to an electronic control unit (not shown) configured to control the operation of the electronic clutch 1 itself.

The electronic clutch 1 is also provided with a coupling device 6 interposed between the clutch pedal 3 and the sensor 5.

The device 6 comprises a lever 7 coupled in an angularly fixed manner to a rotating member (not shown) of the sensor 5 to rotate, with respect to the frame 2, around a rotation axis 8 parallel to the axis 4, and a tie rod 9 extending between two rotation axes 10, 11 parallel to each other and to the axis 8, and of which the axis 10 is the rotation axis between the lever 7 and the tie rod 9 and the axis 11 is the rotation axis between the clutch pedal 3 and the tie rod 9 itself.

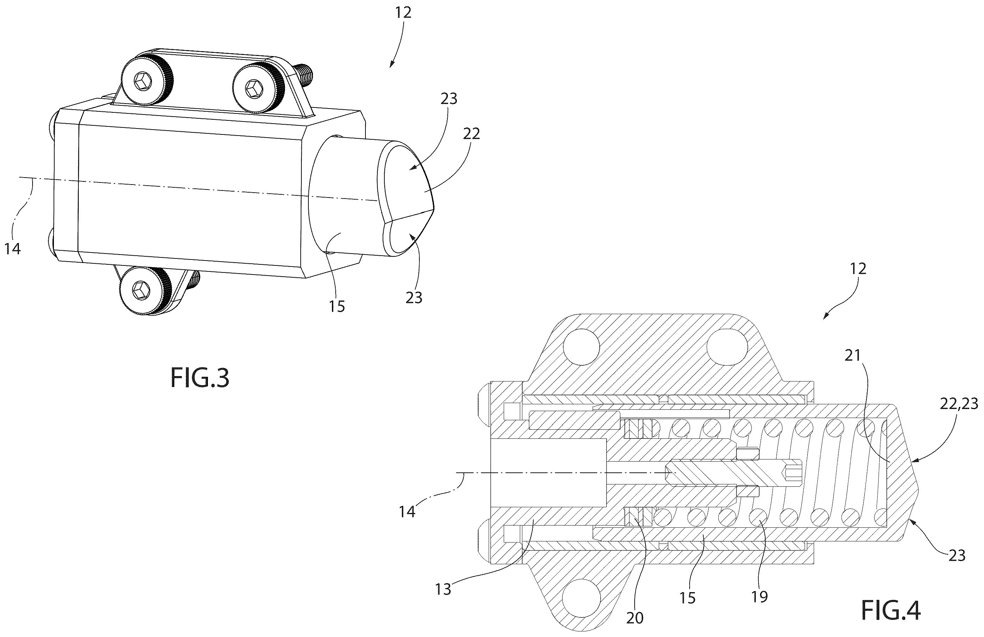

According to what is shown in Figures 3 and 4, the clutch pedal 3 is moved to its rest position (Figure 2a) and normally hold it there by a pushing assembly 12 comprising a cylinder 13, which is fixed to the frame 2, has a cup shape with a longitudinal axis 14, and is engaged in a sliding manner by a cylinder-shaped piston 15 fitted on the cylinder 13 coaxially to the axis 14 itself.

The piston 15 cooperates with a cam follower 16 which is coupled in a rotary manner to a support bracket 17, protruding from the clutch pedal 3, to rotate, with respect to the clutch pedal 3 itself, around a rotation axis 18 parallel to the axis 4.

The piston 15 is moved, and normally hold, in contact with the follower 16 by a spring 19 interposed between a bottom wall 20 of the cylinder 13 and a bottom wall 21 of the piston 15 itself.

The piston 15 is axially limited by an end face 22, which is arranged in contact with the follower 16, and has a curvilinear cam profile, in this case a curvilinear cam profile comprising two opposite ramps 23 connected to each other at an intermediate point of the face 22 itself.

With regard to the above, it should be noted that:
the spring 19 exerts an increasing thrust on the piston 15 during the movement of the follower 16 along the face 22; and
the movement of the follower 16 along the ramps 23 involves the variation of the distance and, therefore, of the arm B between the axis 4 and the contact force F between the follower 16 and the face 22 and, consequently, the variation of the load characteristic acting on the clutch pedal 3.

In other words, the profile of the face 22 is configured to continuously vary both the intensity of the force F between the follower 16 and the face 22, and the arm B between the force F and the axis 4 of the pedal 3 and selectively control the correlation curve between the load applied on the pedal 3 and the stroke of the pedal 3 itself.

The electronic clutch 1 has some advantages mainly deriving from the fact that the pushing assembly 12 is relatively simple and economical and has relatively small dimensions.

## Claims

1. An electronic clutch for road vehicles comprising a clutch pedal (3) mounted so as to rotate around a rotation axis (4) from and to a rest position; a detection device (5), in particular an angular position sensor, to detect the angular position of the clutch pedal (3) around the rotation axis (4); and a pushing assembly (12) to move the clutch pedal (3) to its rest position and normally hold it there; and **characterized in that** the pushing assembly (12) comprises a cylinder (13), a piston (15) coupled to the cylinder (13) in a sliding manner and a pushing device (19) interposed between the cylinder (13) and the piston (15) to hold an end face (22) of the piston (15) in contact with the clutch pedal (3).

2. The electronic clutch according to claim 1, wherein the pushing device (19) comprises a spring mounted between the cylinder (13) and the piston (15).

3. The electronic clutch according to claim 1 or 2, wherein the pushing assembly (12) further comprises a cam follower (16), which is mounted on the clutch pedal (3) and is arranged in contact with the end face (22) of the piston (15).

4. The electronic clutch according to any of the preceding claims, wherein the end face (22) of the piston (15) has a curvilinear cam profile.

5. The electronic clutch according to claim 4, wherein the end face (22) of the piston (15) has a curvilinear cam profile comprising two opposite ramps (23) connected to one another at an intermediate point of the end face (22).

6. The electronic clutch according to claim 4 or 5, wherein the end face (22) of the piston (15) is configured to continuously vary both the intensity of a contact force (F) between the clutch pedal (3) and the end face (22) and an arm (B) between the contact force (F) and the rotation axis (4) of the clutch pedal (3).

7. The electronic clutch according to any one of the preceding claims and further comprising a coupling device (6) interposed between the clutch pedal (3) and the detection device (5).

8. The electronic clutch according to claim 7, wherein the coupling device (6) comprises a lever (7), which is angularly integral to a rotating member of the detection device (5), and a tie rod (9), which is coupled to the clutch pedal (3) and to the lever (7) in a rotary manner.
